# EUROPEAN PATENT SPECIFICATION

(11) **EP 1 626 471 B1**
(45) Date of publication and mention of the grant of the patent: **05.09.2012**
(21) Application number: 05106791.6
(22) Date of filing: 25.07.2005
(51) Int. Cl.: H02B 1/30

(54) **Manufacturing method for cabinets accommodating electric apparatus and cabinet manufactured therewith**
Herstellungsverfahren für einen Schaltschrank und damit ergestellter Schaltschrank
Procédé de fabrication d'une armoire électrique et armoire produit par ce procédé

(30) Priority: 09.08.2004 IT PN20040055
(43) Date of publication of application: 15.02.2006
(73) Proprietor: Hager-Lumetal S.p.A., 33080 Porcia, Pordenone (IT)
(72) Inventor: DEL SANTO, Roberto, 33080, ROVEREDO IN PIANO (Pordenone) (IT); PETRIS, Antonio, 33080, SAN QUIRINO (Pordenone) (IT)
(74) Representative: Giugni, Valter

(56) References cited:
- DE-A1- 10 218 431
- DE-U- 7 029 180
- DE-U1- 9 106 011

## Description

The present invention refers to an improved method for manufacturing metal cabinets adapted to house electric apparatus, the structure of which is improved thanks to the use of the new method for assembling its component parts.

Metal cabinets or enclosures intended to contain electric apparatus are usually comprised of a box-like structure closed by a door. A prior-art method for manufacturing such box-like structure calls for the use of a sheet-metal blank that is cut to length, punched and repeatedly bent until a substantially C-shaped body is eventually obtained, wherein said C-shaped body is comprised of three planar elements extending orthogonally to each other that can form either a rear wall and two side walls or a rear wall and two bases, i.e. a top base and a bottom base of the body. Thereafter, this C-shaped body is fitted in an appropriate fixture in which there are applied front cross-members that are held firmly in position relative to said C-shaped body as said fixture is closed and clamped. As an alternative thereto, said front cross-members are pre-assembled on to said C-shaped body by means of a sequence of welding spots. Finally, the pre-assembled structure is transferred in a welding fixture in view of being definitively assembled by welding the various component parts to each other, wherein welding must be carried out along the entire side contour of the C-shaped body and the end portions of said cross-members.

This traditional method used to manufacture cabinets intended for housing electric apparatus has a number of drawbacks. In the first place, in fact, the need arises for two fixtures to be used, i.e. a pre-assembly fixture and a welding fixture, which entail a production-related operational complication, further to requiring continuous attendance by an operator. The whole manufacturing process turns then out as being excessively long and, as a result, cost-intensive. In addition, the final finish of the structure of the cabinet turns quite often out as being inadequate from a qualitative point of view, owing to the considerable extension of the weld beads, for which the need may arise for an additional grinding operation to be carried out in order to smooth them off.

It therefore is a first purpose of the present invention to provide a manufacturing method for metal cabinets, which does away with any need for a pre-assembly fixture or a sequence of preliminary welding spots to be used in order to keep the various component parts of the cabinet in a pre-assembled state prior to the overall structure of the same cabinet being definitively welded together.

Another purpose of the present invention is to reduce the manual involvement and attendance of an operator, and as far as possible automate the manufacturing process so as to reduce time requirements and costs thereof.

Another purpose yet of the present invention is to improve the finish, i.e. appearance quality of the structure by limiting the extension of weld beads or seams and, as a result, also the time required to produce them.

According to the present invention, these aims, along with further ones hat shall become more readily apparent in the following description, are reached in a cabinet provided with a structure that is made by preassembling the various elements forming the same structure by snap-fitting them together, as well as using a single working fixture in which the pre-assembled structure is placed and welding is only performed at the corners of said structure, as recited in the appended claim 1.

Further features and aspects of the present invention are defined in the appended sub-claims. Document DE 7 029 180 U discloses a method according to the preamble of claim 1.

Features and advantages of the present invention will anyway be more readily understood from the description that is given below by way of non-limiting example with reference to the accompanying drawings, in which:
- Figure 1 is a perspective view of the structure of a cabinet according to the present invention;
- Figure 2 is a perspective view of the parts and elements entering the construction of the structure shown in Figure 1;
- Figures 3 and 4 are partial perspective views of two operational steps in the assembly of the structure shown in Figure 1.

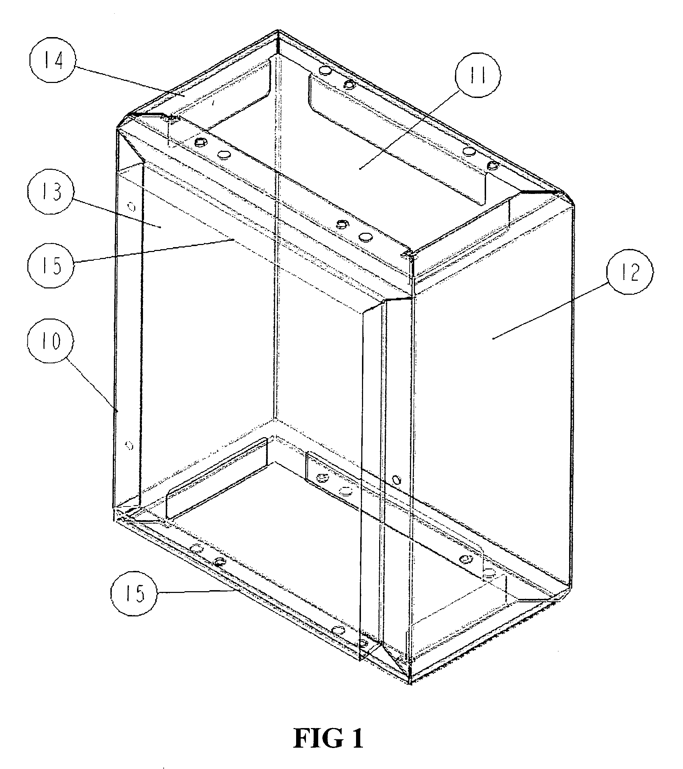

The cabinet according to the present invention appears (Figure 1) as a parallelepiped structure comprising a C-shaped body 10 formed by a rear wall 11 and two side walls 12, 13.

As an alternative thereto, the body 10 may of course be constituted by a rear or back wall and two bases, i.e. a top base or ceiling and a bottom base.

The body 10 is obtained from a single sheet-metal blank that is cut and bent repeatedly so as to provide appropriately profiled peripheral edges. In particular, according to the present invention, the upper edge (and possibly also the lower one) may be bent at 90° relative to the walls of the body, so as to form a planar frame 14 adapted to allow for a closing plate or any further structural element, as may be required, to be placed thereupon. It can be readily appreciated that, in the absence of a closing plate, this construction solution offers a further advantage in that it provides a larger aperture on top and/or at the bottom for, say, electric cables to pass therethrough.

When being cut, the body 10 is also punched in view of providing a series of holes and/or apertures in the walls and along the profiled edges thereof, so as to allow for the application of possible fittings or accessory items inside the cabinet, such as for instance shelves or racks, as well as fastening or support elements, such as screws, studs and the like. In particular, all cabinets of this kind are usually provided with a front door (not shown), which must be hinged in a generally known manner on to a side post or stanchion of the cabinet.

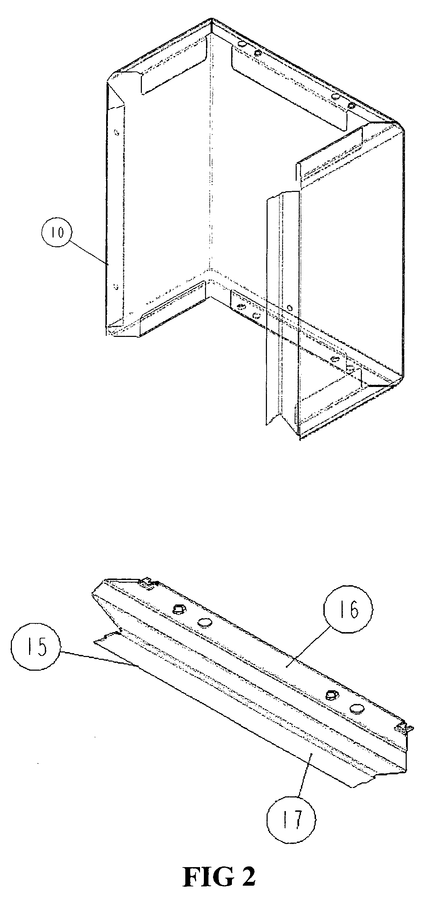

For the two side walls 12, 13 of the structure 10 to be joined to each other on the front side, use is made of two cross-members 15 arranged along the upper edge and the lower or bottom edge of the structure, respectively (Figures 1 and 2). These cross-members are appropriately profiled so that, when they are assembled with the body 10 of the structure, they couple with the edges and corners of the same body, in particular in the corner zones, by the mating of shapes.

In particular, each cross-member 15 is obtained by repeatedly bending a cut-to-length sheet-metal blank so that the latter eventually features an upper horizontal border 16 completing the plane of the frame 14 of the body 10, and a lower horizontal border 17 aligning with the frontally protruding profiles of the side walls 12 and 13 of the body 10.

According to the invention, assembling the cross-members 15 with the body 10 is done by causing the end portions of the cross-members to join with the corresponding end portions of the body by mutually snap-fitting together, wherein advantage is solely taken of the inherent elasticity of the sheet-metal, i.e. no use is made of a dedicated fixture. To such purpose, each one of the end portions of the cross-members 15 is provided - at the rear corner of the upper border 16 - with a recess 20, in which there is provided a notching 21 that is designed to engage a corresponding notching 22 provided at the front end portion of the frame 14 of the body 10. Furthermore, each end portion of the cross-members 15 is provided with a tooth 23 projecting laterally from the edge of the lower border 17 and adapted to engage an undercut 24 provided on the edge of the corresponding end portion of the side wall of the body 10.

It will of course be fully appreciated that the above-described items and details may be suitably implemented in any other manner as considered more appropriate or befitting. For example, the undercut 24 may be provided on the cross-member 15, and the tooth 23 may be provided on the edge of the corresponding end portion of the side wall of the body 10.

The above-described solution has anyway a further advantage in that it is effective in ensuring - during assembly - that the required dimensions of the structure are reliably held within the pre-set tolerance range. This practically enables any need for possible mechanical adjustments or taking-up reprocessing - as may be required to allow the structure to then fit into the welding fixture - to be done away with.

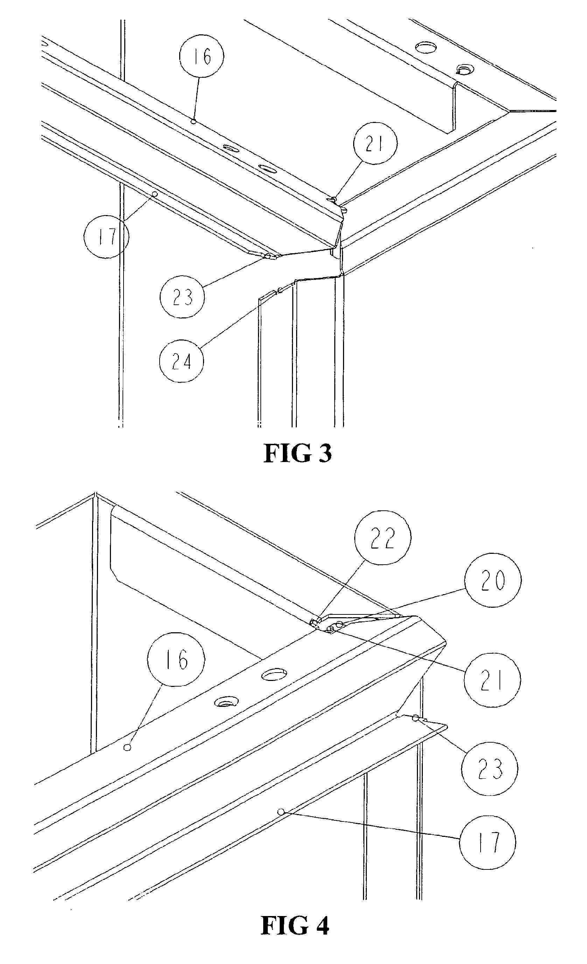

The next steps in the process of assembling the cross-members 15 with the C-shaped body 10 are illustrated in Figures 3 and 4. As it can be noticed there, in the described embodiment, inserting each cross-member 15 requires such cross-member be rotated about its own longitudinal axis in order to sequentially complete the two snap-fitting couplings with the end portions of the body 10. As an alternative thereto, the insertion may be carried out without rotating the cross-members, but rather under a simple deformation of the edges of the side walls of the body 10 taking advantage of elasticity of the sheet-metal.

Upon having been assembled in this way, the structure is then fitted in a welding fixture, in which, according to the invention and as it quite clearly appears in the illustrations in the Figures, welding is performed only in correspondence to the corners of the same structure. In fact, thanks to the upper edge of the C-shaped body having been given the particular continuous configuration as described above (see Figures 1 and 2), welding is performed in positions that are exactly localized to the end portions of the cross-members 15, where they couple by snap-fitting with the edges of the body 10.

The cabinet may then be finished and completed in a traditional manner, for instance by paint-coating it and finally applying a front closing door.

With the inventive solution as described above by way of non-limiting example, the desired aim is fully reached, in that a cabinet structure is effectively provided, which can be manufactured with the use of much less tooling and equipment and can further be completed with a much shorter extension of the weld beads, thereby reducing manufacturing time and improving finishing quality.

## Claims

1. Method for manufacturing metal cabinets adapted to accommodate electrical apparatus, said method comprising at least a cutting and punching step of a sheet-metal blank, a bending step of said sheet-metal blank to obtain the various elements entering the construction of the cabinet, an assemble step to give the cabinets structure its intended form, and a wielding step of said elements to provided the final structure of the cabinet, in which these steps are traditionally carried out within appropriate fixtures, **characterized in that** the structure (10) of the cabinet is assembled by snap-fitting the elements (10, 15) forming the same structure together, and **in that** it uses a single fixture in which the assembled structure is inserted and welding is performer on said structure only at the corners thereof.

2. Method for manufacturing metal cabinets according to claim 1, comprising a C-shaped body (10) and at least two cross-members (15) for joining the sides of said body with each other, **characterized in that** said cross-members (15) are pre-assembled on to the body (10) by causing them to couple with the end portions of the C-shaped body by snap-fitting together.

3. Method for manufacturing metal cabinets according to claim 1 or 2, **characterized in that** assembling the cross-members (15) on to the body (10) by letting the end portions thereof snap-fit together is done by causing the same cross-members to rotate about their own longitudinal axis.

4. Cabinet for accommodating electrical apparatus comprising a structure (10) made according to any of the preceding claims 1 to 3, **characterized in that** said structure comprises a C-shaped body with continuous profiled peripheral edges in which there are provided notchings (22) and undercuts (24) adapted to be engaged in a snap-fitting manner by notchings (20) and teeth (23), respectively, that are in turn provided at the end portions of cross-members (15) connecting the end portions of the side walls (12, 13) of the C-shaped body (10) with each other frontally.

## Patentansprüche

1. Verfahren zum Herstellen von Metallschränken, die dazu eingerichtet sind, ein elektrisches Gerät aufzunehmen, wobei das Verfahren umfasst: wenigstens einen Schneid-und Stanzschritt eines Metallblechrohlings, einen Biegeschritt des Metallblechrohlings, um die unterschiedlichen Elemente zu erhalten, die Teil der Konstruktion des Schrankes sind, einen Montageschritt, um dem Schrankaufbau seine beabsichtigte Form zu geben, und einen Schweißschritt der Elemente, um den fertigen Aufbau des Schrankes zu erzeugen, wobei diese Schritte normalerweise in geeigneten Vorrichtungen ausgeführt werden, **dadurch gekennzeichnet, dass** der Aufbau (10) des Schrankes durch Zusammenrasten der Elemente (10, 15), die diesen Aufbau bilden, zusammengesetzt wird, und dass das Verfahren eine einzige Vorrichtung verwendet, in die der zusammengesetzte Aufbau eingefügt wird, und das Schweißen an dem Aufbau nur an dessen Ecken erfolgt.

2. Verfahren zum Herstellen von Metallschränken nach Anspruch 1, umfassend einen C-förmigen Körper (10) und wenigstens zwei Querelemente (15) zum Verbinden der Seiten des Körpers miteinander, **dadurch gekennzeichnet, dass** die Querelemente (15) an dem Körper (10) vormontiert werden, indem bewirkt wird, dass sie sich mit den Endabschnitten des C-förmigen Körpers durch Zusammenrasten verbinden.

3. Verfahren zum Herstellen von Metallschränken nach Anspruch 1 oder 2, **dadurch gekennzeichnet, dass** das Anbringen der Querelemente (15) an dem Körper (10), indem man die Endabschnitte derselben zusammenrasten lässt, dadurch erfolgt, dass bewirkt wird, dass sich diese Querelemente um ihre eigene Längsachse drehen.

4. Schrank zum Aufnehmen eines elektrischen Gerätes, umfassend einen Aufbau (10), der nach einem der vorhergehenden Ansprüche 1 bis 3 gefertigt ist, **dadurch gekennzeichnet, dass** der Aufbau einen C-förmigen Körper mit kontinuierlich profilierten Randkanten enthält, in denen Kerben (22) und Hinterschneidungen (24) ausgebildet sind, die dazu eingerichtet sind, mit Kerben (20) bzw. Zähnen durch Einrastpassung in Eingriff gebracht zu werden, die ihrerseits an den Endabschnitten der Querelemente (15) vorgesehen sind, die die Endabschnitte der Seitenwände (12, 13) des C-förmigen Körpers (10) miteinander frontal verbinden.

## Revendications

1. Méthode de fabrication d'armoire en métal conçue pour accueillir un appareil électrique, ladite méthode comprenant au moins une étape de découpe et de poinçonnage d'une tôle métallique vierge, une étape de pliage de ladite tôle métallique vierge pour obtenir différents éléments entrant dans la construction de l'armoire, une étape d'assemblage pour donner à la structure de l'armoire sa forme voulue, et une étape de soudage desdits éléments pour donner la structure finale de l'armoire, dans laquelle ces étapes sont traditionnellement réalisées sans installations appropriées, **caractérisée en ce que** la structure (10) de l'armoire est assemblée par encliquetage des éléments (10, 15) formant ensemble la même structure, et **en ce qu'**il est utilisé une installation unique dans laquelle la structure assemblée est insérée et un soudage est effectué seulement sur l'angle de ladite structure.

2. Méthode pour fabriquer une armoire en métal selon la revendication 1, comprenant un corps en forme de C (10) et au moins deux traverses (15) pour joindre les côtés dudit corps entre eux, **caractérisée en ce que** lesdites traverses (15) sont pré-assemblés sur le corps (10) en provoquant leur couplage avec les extrémités du corps en forme de C en les encliquetant ensemble.

3. Méthode pour fabriquer une armoire en métal selon les revendications 1 ou 2, **caractérisée en ce que** l'assemblage des traverses (15) sur le corps (10) en laissant les extrémités de celui-ci s'encliqueter ensemble est réalisé en amenant les mêmes traverses à tourner sur leur propre axe longitudinal.

4. Armoire pour accueillir un appareil électrique comprenant une structure (10) conçue selon l'une quelconque des précédentes revendications 1 à 3, **caractérisée en ce que** ladite structure comprend un corps en forme de C avec des bords périphériques profilés continus dans lesquels sont prévues des entailles (22), et des découpes (24), adaptées pour être engagées par encliquetage à l'aide d'entailles (20) et de dents (23), respectivement, qui sont pour leur part prévues aux extrémités des traverses (15) connectant frontalement les extrémités des parois latérales (12, 13) du corps en forme de C (10) l'une avec l'autre.
